# EUROPEAN PATENT SPECIFICATION

(11) **EP 1 852 335 B1**
(45) Date of publication and mention of the grant of the patent: **21.08.2013**
(21) Application number: 06713297.7
(22) Date of filing: 08.02.2006
(51) Int. Cl.: B62D 25/20, B62D 21/00, F16F 9/54

(54) **DEVICE FOR REINFORCING VEHICLE BODY OF VEHICLE**
VORRICHTUNG ZUR VERSTÄRKUNG EINER FAHRZEUGKAROSSERIE
DISPOSITIF POUR RENFORCER UNE CARROSSERIE DE VÉHICULE

(30) Priority: 24.02.2005 JP 2005048517
(43) Date of publication of application: 07.11.2007
(73) Proprietor: Yamaha Hatsudoki Kabushiki Kaisha, Iwata-shi, Shizuoka 438-8501 (JP)
(72) Inventor: HARADA, Toyoji, ai, Iwata-shi Shizuoka, 4388501 (JP); SAKAI, Kouji, ai, Iwata-shi Shizuoka, 4388501 (JP)
(74) Representative: Grünecker, Kinkeldey, Stockmair & Schwanhäusser
(86) International application number: PCT/JP2006/302154
(87) International publication number: WO 2006/090586

(56) References cited:
- EP-A- 1 209 062
- EP-A- 1 671 872
- EP-A2- 0 955 228
- WO-A-2005/077738
- WO-A1-2004/104442
- WO-A1-2005/077738
- DE-A1- 10 040 673
- DE-A1- 10 247 492
- JP-A- 2002 211 437
- JP-A- 2003 252 240
- JP-A- 2007 203 896
- US-B1- 6 467 836

## Description

### [Technical Field]

This invention relates to a vehicle body frame with a vehicle body reinforcement device for vehicles for improving ride comfort while preventing vibration from being generated by reinforcing the vehicle body frame.

### [Background Art]

Conventionally, there has been a practice of using the so-called retrofit reinforcement members as disclosed in the US Patent No. 5411311 (hereinafter simply referred to as Patent Document 1) to partially increase the strength of the vehicle body frame according to driving conditions and driver's preference. The reinforcement member disclosed in the Patent Document 1 is formed in an elongated shape and located in the engine compartment.

This reinforcement member is attached to the upper ends of a pair of right and left parts called the suspension towers in shoptalk of the vehicle body frame to interconnect the suspension towers. Therefore, the reinforcement member is to reinforce the vehicle body against lateral forces applied from the upper ends of front suspension shock absorbers to the vehicle body.

The conventional reinforcement member described above, when compressed with loads applied to it and released immediately thereafter, might generate vibration and deteriorate ride comfort. In order to prevent such vibration from being generated, occasionally damping force producing means such as a hydraulic damper or a rubber member is interposed in the middle of longitudinal direction as disclosed in JP-A-2002-211437 (hereinafter simply referred to as Patent Document 2).

Further, in order to prevent vibration while reinforcing the vehicle body, it is conceivable to employ a constitution disclosed for example in the German patent DE10247492-A1 (hereinafter simply referred to as Patent Document 3). The Patent Document 3 is to make the frame member itself such as the body shell and frame of the vehicle have the function of preventing generation of vibration. The damping force producing means shown in the Patent Document 3 employs a constitution in which two elongated frame members are interconnected through a gap filled with viscoelasticity plastics.

The frame members serving for both reinforcement and anti-vibration are provided in their longitudinal directions directed in different directions on the floor part of the passenger compartment. In other words, they are provided so that their longitudinal directions are in: the lateral direction of the vehicle, the oblique direction extending from the right front side to the left rear side of the vehicle body, and the longitudinal direction of the vehicle body. The US 6 467 836 B (Patent document 4) shows a vehicle body frame with a vehicle body reinforcement device having vehicle body reinforcement members according to the preamble of claim 1.

### [Disclosure of the Invention]

### [Problems to be Solved by the Invention]

However, in order to provide the reinforcement member in the engine compartment as shown in the Patent Document 1 and Patent Document 2, there is a problem of increased number of restrictions on installing the reinforcement member. This is because there is no extra space in the engine compartment in which the engine, its auxiliary devices, and many other devices are housed, as well as restriction to the hood height.

Further, the reinforcement member, as it traverses the upper space in the engine compartment, extremely worsens the serviceability of the engine and other devices. While it is conceivable to provide the reinforcement member in the cabin space to solve such inconvenience, employing such a constitution undesirably results in reducing the cabin space.

Further, the above reinforcement member is to reinforce the front part of the vehicle body in the lateral direction and cannot reinforce the part between front and rear parts of the vehicle body. As a result, the reinforcement member cannot restrict elastic deformation in the longitudinal direction of the vehicle body frame occurring as in sudden deceleration of the vehicle and might give uncomfortable feeling to passengers.

Further, because the reinforcement constitution described in the Patent Documents 3 and 4 is made integral with the body shell and frame of the vehicle, the constitution can be provided only when the vehicle body is manufactured. That is, the reinforcement constitution cannot be attached to or removed from the vehicle body after the manufacture of the vehicle body. Therefore, with the vehicle employing this reinforcement constitution, ride comfort cannot be easily improved according to the preference of the driver.

This invention has been made to solve the above problems. Therefore, the object of the invention is to provide a vehicle body frame with a reinforcement device that makes it possible to easily improve ride comfort by attachment or removal of the reinforcement member according to the preference of the driver while satisfying the conditions described below. The conditions are: absence of substantial change in an existing vehicle body constitution and freedom from worsening serviceability and in-cabin comfort.

### [Means for Solving the Problems]

To accomplish the object, the vehicle body frame with a vehicle body reinforcement device according to the invention is provided in claim 1.

### [Effect of the Invention]

The vehicle body reinforcement device according to the invention, as it is attached to the vehicle body frame, appropriately improves longitudinal rigidity of the vehicle body frame and improves ride comfort while restricting vibration from being generated. The vehicle body reinforcement device may be detachably attached easily from outer underside to the vehicle body while lifting the vehicle body with a jack or the like.

The detachable attachment of the vehicle body reinforcement device to the vehicle body described above may be realized simply by providing for example attachment seats and attachment brackets to an existing vehicle body.
Therefore, according to the invention, it is possible to provide a vehicle body reinforcement device for vehicles for reinforcing the vehicle body in the longitudinal direction and easily improving ride comfort without making substantial change in the vehicle body constitution of an existing vehicle. Further, because the vehicle body reinforcement device according to the invention utilizes the space exposed outside the passenger compartment below the vehicle body, ease of service and comfort in the passenger compartment are not adversely affected.

According to a preferred embodiment of the invention, the vehicle body reinforcement device may be formed long in the longitudinal direction of the vehicle body while utilizing a wide space under the floor panel. Therefore, the vehicle body reinforcement device according to the invention makes it possible to efficiently make reinforcement against deformation in the longitudinal direction while restricting vibration from being generated.
Preferably, the Vehicle body reinforcement device may be formed long in the longitudinal direction of the vehicle body while utilizing a wide space outside the side sill. Therefore, the vehicle body reinforcement device according to the invention makes it possible to efficiently make reinforcement against deformation in the longitudinal direction while restricting vibration from being generated.

Preferably, front and rear parts widely apart of the vehicle body may be interconnected through the reinforcement device. Therefore, the vehicle body reinforcement device according to the invention makes it possible to efficiently make reinforcement against deformation in the longitudinal direction while restricting vibration from being generated.
The vehicle body reinforcement device preferably does not project largely outward from the longitudinally extending parts of the vehicle body frame. Therefore, it is possible to make the vehicle compact in spite of being provided with the vehicle body reinforcement device.

According to another advantageous embodiment of the invention, it is possible to appropriately increase the rigidity between the vicinity of part of the vehicle body frame to which longitudinal pressure is applied from the front wheel suspension system and the vicinity of part of the vehicle body frame to which longitudinal pressure is applied from the rear wheel suspension system while restricting vibration from being generated, and to efficiently improve ride comfort.
Further, the vehicle body reinforcement device according to the invention, when the front wheel suspension system attachment seat and the rear wheel suspension system attachment seat are utilized to attach the device to the vehicle body frame, makes it possible to make the attachment easier and more economical in comparison with the case in which dedicated attachment seats are provided on the vehicle body frame.

Further, it is possible to appropriately increase the rigidity in the longitudinal direction of part of the vehicle frame to which longitudinal pressing forces are applied from the lower arms of the front wheel suspension system and from the lower arms of the rear wheel suspension system while restricting vibration from being generated. Therefore, it is possible to efficiently improve ride comfort.
When the lower arm attachment brackets are utilized to attach the vehicle body reinforcement device according to the invention to the vehicle body frame, the attachment is easier and more economical in comparison with the case in which dedicated attachment seats are provided on the vehicle body frame.

Moreover, according to a beneficial embodiment of the invention, it is possible to appropriately increase the rigidity in the longitudinal direction between part of the vehicle body frame to which longitudinal pressing force is applied from the lower arms of the front wheel suspension system and part of the vehicle body frame to which longitudinal pressing force is applied from the rear stability braces while restricting vibration from being generated.
If the attachment brackets of the lower arms of the front wheel suspension system are utilized to attach the vehicle body reinforcement device according to the invention, the attachment is easier and more economical in comparison with the case in which dedicated attachment seats are provided on the vehicle body frame.

Furthermore, it is possible to realize further appropriate improvement in the rigidity of the vehicle body frame already improved with the front stability braces and with the rear stability braces while restricting vibration from being generated and to efficiently improve ride comfort.
Because it is possible to appropriately improve the lateral direction rigidity with another vehicle body-use auxiliary devices while restricting vibration from being generated, it is possible to further improve ride comfort.

### [Brief Description of Drawings]

FIG. 1 is a perspective underside view of a vehicle provided with the vehicle body reinforcement device for vehicles according to the invention.
FIG. 2 is a plan view of the vehicle body reinforcement device for vehicles according to the invention.
FIG. 3 is a vertical sectional view of the vehicle body reinforcement device for vehicles according to the invention.
FIG. 4 is a perspective view of the front end part of the vehicle body reinforcement device attached to a front stability brace.
FIG. 5 is a perspective view of a front wheel suspension system.
FIG. 6 is a perspective view of a rear wheel suspension system.
FIG. 7 is a perspective view of a monocoque body with the vehicle body reinforcement device provided on the outer side of a side sill.
FIG. 8 is a perspective view of a ladder-shaped vehicle body frame provided with the vehicle body reinforcement device according to the invention.
FIG. 9 is a perspective view of another attachment example of the vehicle body reinforcement device.
FIG. 10 is a perspective view of another attachment example of the vehicle body reinforcement device.

### [Best Mode for Carrying out the Invention]

### (First Embodiment)

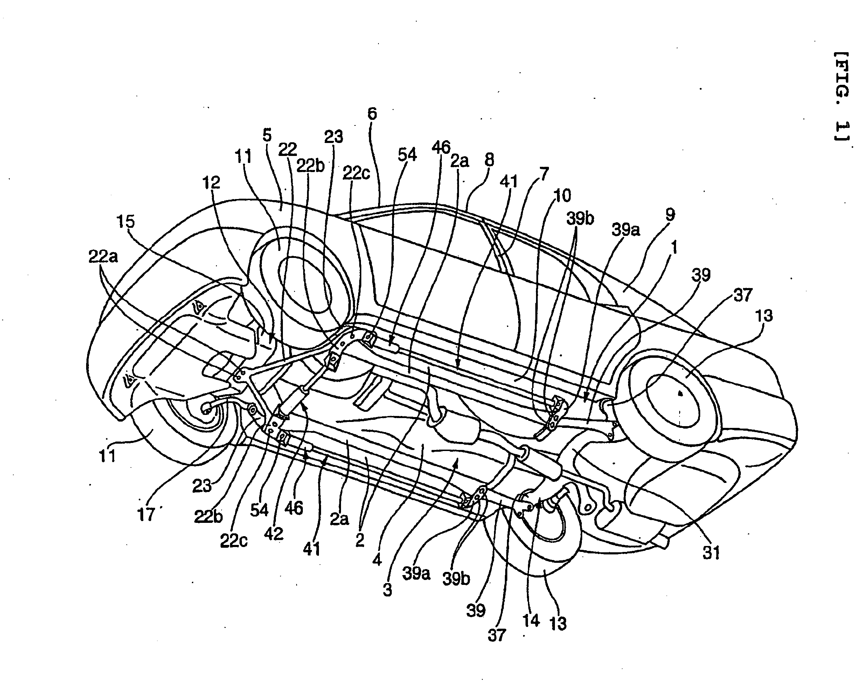

An embodiment of the vehicle body frame with a vehicle body reinforcement device according to the invention is described below in detail in reference to the FIGs. 1 to 6.

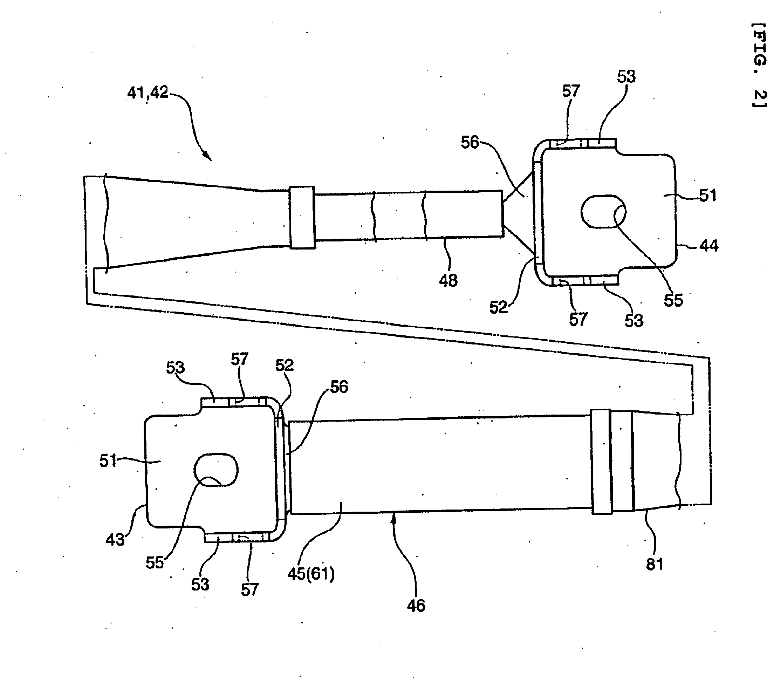

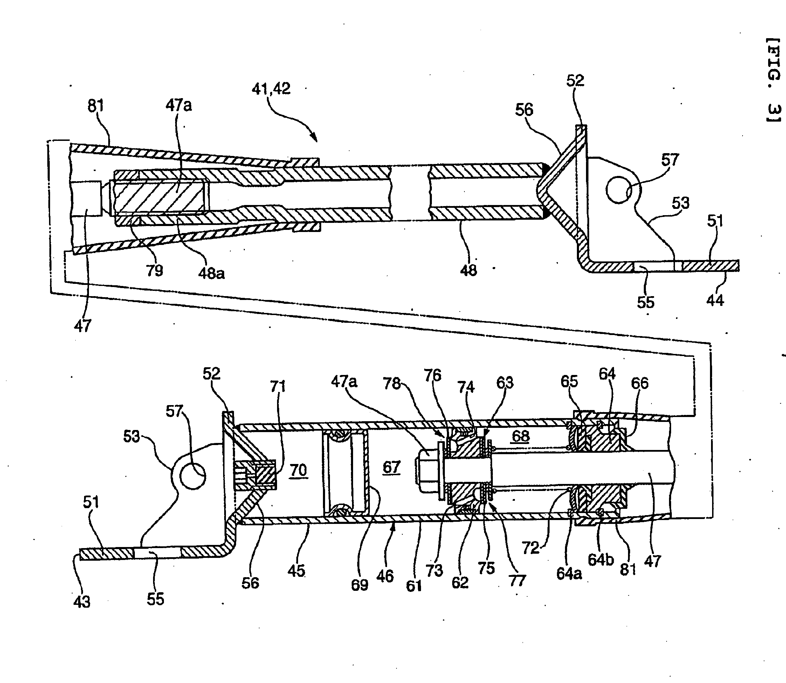

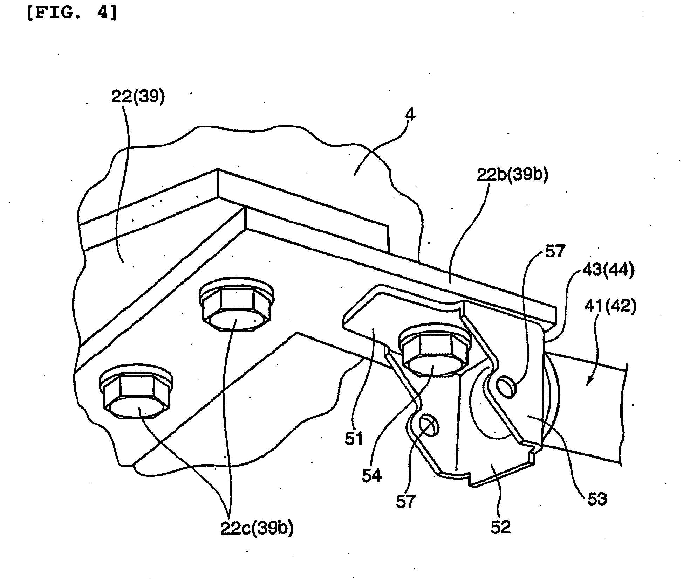

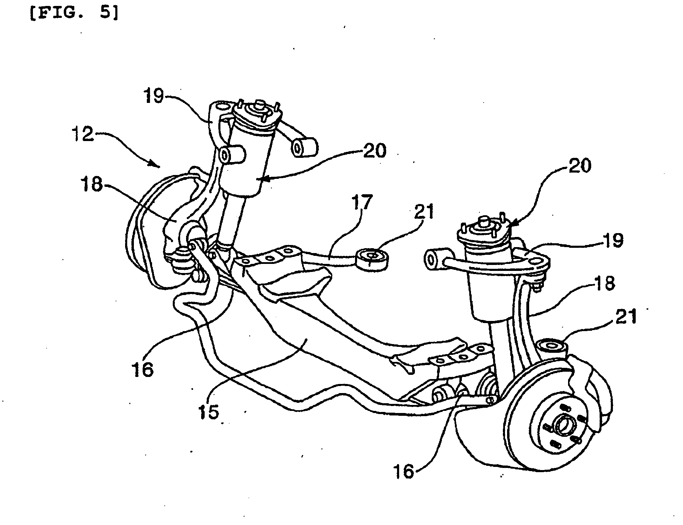

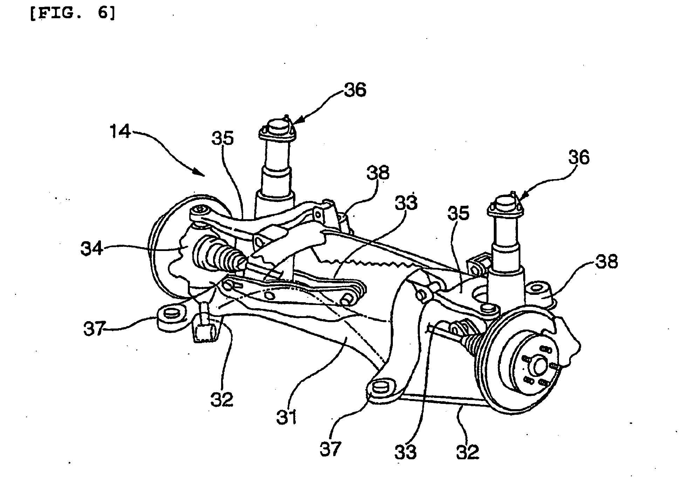

FIG. 1 is a perspective underside view of a vehicle provided with the vehicle body reinforcement device for vehicles according to the invention. FIG. 2 is a plan view of the vehicle body reinforcement device for vehicles according to the invention. FIG. 2 is depicted with a welding-use conical body located above an attachment plate. FIG. 3 is a vertical sectional view of the vehicle body reinforcement device for vehicles according to the invention. FIG. 4 is a perspective view of the front end part of the vehicle body reinforcement device attached to a front stability brace. FIG. 5 is a perspective view of a front wheel suspension system. FIG. 6 is a perspective view of a rear wheel suspension system.

In these figures, the reference numeral 1 denotes a monocoque body as a vehicle body frame for an automobile according to this embodiment. This monocoque body 1, as shown in FIG. 1, includes: side frames 2, 2 provided to form a pair in right and left directions of the vehicle body and to extend in the longitudinal direction on both sides of the vehicle body; a floor panel 4 constituting an underbody 3 together with the side frames 2, 2; front fender aprons 5; front pillars 6; center pillars 7; a roof 8; rear pillars 9; and side sills 10. This monocoque body 1 is made up by combining and welding together a plural number of press-formed plate members and pipes. The side frame 2 has an integrally formed ridge 2a of a square-cornered U-shape cross section, projecting downward and extending in the longitudinal direction.

A front wheel suspension system 12 having front wheels 11 is provided in the front end part of the monocoque body 1, and a rear wheel suspension system 14 having rear wheels 13 is provided in the rear end part.
The front wheel suspension system 12 is of the conventionally well-known double wishbone type, made up as shown in FIG. 5 of: a front suspension member 15, front lower arms 16, rear lower arms 17, knuckles 18, upper arms 19, cushion units 20, etc. The front suspension member 15 is attached to the underside of the underbody 3.

The front lower arm 16 is provided between the front suspension member 15 and the lower end of the knuckle 18.
The end of the rear lower arm 17 on the front wheel side is pivoted on the lower end part of the knuckle 18. A connecting member 21 is provided on the vehicle body side end of the rear lower arm 17. The end part of the rear lower arm 17 on the vehicle body side is attached to a floor panel 4 through a front stability brace 22 to be described later (See FIG. 1) attached to the underside of the connecting member 21. The connecting member 21 is made up of: an outer cylinder welded to the rear lower arm 17, an inner cylinder put in the outer cylinder, and a rubber damper interposed between these cylinders. The inner cylinder is attached to the front stability brace 22.

The front wheel side end of the upper arm 19 is pivoted on the upper end part of the knuckle 18. The vehicle body side end of the upper arm 19 is pivoted on the underbody 3.
The cushion unit 20 is interposed between the front lower arm 16 and the underbody 3 located above the front lower arm 16.

The front stability brace 22 is formed as shown in FIG. 1, seen from under, in a V-shape with its edge pointing forward. The front end part of the front stability brace 22 is secured using two fitting bolts 22a to the underside center part of the front suspension member 15. An attachment bracket 22b to be described later is put on the underside of the rear end part (on each side) of the front stability brace 22. The rear end part on each side of the front stability brace 22 is secured together with the attachment brace 22b to the raised ridge 2a of the side frame 2 using two fitting bolts 22c.

The connecting member 21, provided at the vehicle body side end of the rear lower arm 17, is supported with an arm-use bracket 23. The arm-use bracket 23 is provided integrally with each of both the lateral direction ends of the front stability brace 22.
Providing the front stability brace 22 of the above constitution on the monocoque body 1 increases the attachment rigidity of the front suspension member 15 and the support rigidity of the rear lower arm 17.

The rear wheel suspension system 14 is of the conventionally well-known double wishbone type. The rear wheel suspension system 14 is made up as shown in FIG. 6 of: a rear suspension member 31, front lower arms 32, rear lower arms 33, knuckles 34, upper arms 35, rear cushion units 36, etc. The rear suspension member 31 is formed with a right and left pair of front side attachment parts 37, 37, and rear side attachment parts 38, 38, and attached to the underside of the underbody using the attachment parts 37, 38.

Rear stability braces 39 to be described later are respectively attached to the underside of the front side attachment parts 37. The rear stability braces 39 interconnect the front side attachment parts 37 and the rear end part of the raised ridges 2a located before the front side attachment parts 37 to improve the attachment rigidity of the of the front side attachment parts 37. Attachment brackets 39a to be described later are attached to the underside of the front end parts of the attachment brackets 39a. Each of the front end parts of the attachment brackets 39a is secured together with the attachment bracket 39a to the rear end part of the raised ridge 2a using two fitting bolts 39b.
The front lower arm 32 and rear lower arm 33 on each side of the rear wheel suspension system 14 are provided between the rear suspension member 31 and the lower end part of the knuckle 34.
The vehicle body side end of the front lower arm 32 is pivoted in the vicinity of the front side attachment part 37 of the rear suspension member 31.

On the monocoque body 1 of this embodiment, a right and left pair of vehicle body reinforcement devices 41 according to the invention are detachably provided between lateral ends of the front stability braces 22 and the front ends of the pair of right and left rear stability braces 39.
These vehicle body reinforcement devices 41 are disposed in laterally paired positions, on the monocoque body, in lower part below the floor panel 4 of the monocoque body, exposed outside the passenger compartment.

The front end part of the vehicle body reinforcement device 41 is attached to the lateral end of the front stability brace 22 through the attachment bracket 22b. In other words, the front end part of the vehicle body reinforcement device 41 is attached to the attachment bracket 22b secured to the underbody 3 by collective tightening with the front stability brace 22. Also the front end part of the vehicle body reinforcement device 41 is detachably attached from under to the attachment bracket 22b. The attachment bracket 22b extends from the position secured together with the front stability brace 22 to the inside of the vehicle body rear side and to the vehicle body inside. The front end part of the vehicle body reinforcement device 41 is attached to the end part of the vehicle body rear side of the attachment bracket 22b.

The rear end part of the vehicle body reinforcement device 41 is attached to the front end part of the rear stability brace 39 through the attachment bracket 39a. In other words, the rear end part of the vehicle body reinforcement device 41 is attached to the attachment bracket 39a secured as tightened together with the rear stability brace 39 to the attachment bracket 39a secured to the underbody 3. Again the rear end part of the vehicle body reinforcement device 41 is detachably attached from under to the attachment bracket 39a. The attachment bracket 39a extends in lateral direction of the vehicle body from the position where it is secured to the underbody 3 together with the rear stability brace 39. The rear end part of the vehicle body reinforcement device 41 is attached to the lateral extension end part of the vehicle body.

To put it in detail, each of the vehicle body reinforcement devices 41 is formed in elongated shape, with its length in the longitudinal direction of the vehicle body, spanned between the rear end part of the front stability brace 22 and the front end part of the rear stability braces 39.
The vehicle body reinforcement devices 41 are placed parallel to each other. The positions the vehicle body reinforcement devices 41 are placed in are set along the raised ridges 2a of the side frames 2. In this embodiment, the longitudinal extension parts described in claim 5 are constituted with the raised ridges 2a.

Each of these vehicle body reinforcement devices 41 is placed as shown in FIG. 1 between the wheelbases of the vehicle body and formed of a length extending over half the wheelbase or greater.
In this embodiment, a vehicle body reinforcement device 42, the same in constitution as the vehicle body reinforcement device 41 but smaller in length, is interposed, with its length fitted in the lateral direction of the vehicle, between both lateral end parts of the front stability brace 22. The vehicle body reinforcement device 42 is detachably attached from under to the vehicle body inner side ends of the attachment brackets 22b provided on both ends of the front stability brace 22. Therefore, also the vehicle body reinforcement device 42 results in being detachably attached from under to a position exposed outside the passenger compartment under the monocoque body 1 of the vehicle.

The vehicle body reinforcement device 41 extending in the longitudinal direction of the vehicle and the vehicle body reinforcement device 42 extending in the lateral direction, as shown in FIGs. 2 and 3, are each made up of: attachment members 43, 44 provided at both ends for attachment to the vehicle body side, a hydraulic damper 46 having a hydraulic cylinder 45 welded to one 43 of the attachment members 43, 44, and an extension rod 48 interconnecting the piston rod 47 of the hydraulic damper 46 and the other attachment member 44.

The attachment members 43, 44 are each made of steel sheet press-processed into a specified shape and made up of : an attachment plate 51 attached to the vehicle body side, a supporting plate 52 rising from one end of the attachment plate 51, and a pair of reinforcement ribs 53 interconnecting the side parts of the two plates.

In the attachment plate 51 as shown in FIG. 2 is bored an elongated hole 55 for passing a fitting bolt 54 (See FIG. 1) for attaching the attachment members 43, 44 to the vehicle body side. The fitting bolt 54 as shown in FIG. 4 secures the attachment plate 51 to the attachment bracket 22b (39b) secured to the floor panel 4 together with the front stability brace 22 or the rear stability brace 39.
The elongated hole 55 is formed elongated in lateral direction in FIG. 2, at right angles to the main surface of the supporting plate 52.

The attachment members 43, 44 are attached, in the state of the main surface of the supporting plate 52 orthogonal to the longitudinal direction of the vehicle body reinforcement devices 41, 42. Therefore, the positions the attachment members 43, 44 are attached to may be fine-adjusted in the longitudinal direction with respect to the attachment bolt 54 by the displacement margin provided by the elongated hole 55.

The supporting plate 52 is provided with a welding-use conical part 56 in its center. The conical part 56 is formed by conically pressing out the central part of the supporting plate 52 in the direction away from the attachment plate 51. Holes 57 for attaching a damping force measuring device are bored in the reinforcement ribs 53.

The hydraulic damper 46 as shown in FIG. 3 is made up of: the hydraulic cylinder 45 having a cylinder tube 61 with its one end closed with the attachment member 43, and a throttle 63 provided in the piston 62 of the hydraulic cylinder 45. The hydraulic damping force generating means referred to in this invention is constituted with the hydraulic damper 46.
At one end of the cylinder tube 61, the welding-use conical part 56 of one attachment member 43 is welded in the state of being inserted. The welding is carried out by well-known projection method, with the welding-use conical part 56 fit in the opening of the cylinder tube 61 so that both components come into line contact with each other.

Inserting and fitting the welding-use conical part 56 into the cylinder tube 61 as described above results in that, even if the end edge of the cylinder tube 61 were formed aslant, the welding-use conical part 56 and the cylinder tube 61 come into line contact with each other in the state of being on approximately the same axial line. That is, in comparison with the case in which seam welding is made in the state of the open end of the cylinder tube 61 abutting on a flat plate for closure, it is possible to facilitate manufacture of the cylinder tube 61, reduce costs, and improve appearance.

Projection welding is made, in the state of the welding-use conical part 56 and the cylinder tube 61 combined together as described above, and applying high tension current to them while pressing them against each other in the axial direction.
The other end of the cylinder tube 61 is closed with a rod guide 64 supporting the piston rod 47 to be movable. The rod guide 64 is inserted in and secured to the cylinder tube 61 with stop rings 64a, 64b.

At both axial ends of the rod guide 64, seal members 65, 66 are provided for sealing the part of it where the piston rod 47 passes through.
The piston 62 is formed circular in cross section for fitting in the cylinder tube 61 and defines a first oil chamber 67 and a second oil chamber 68 within the cylinder tube 61, and secured to the piston rod 47 passing through axial part using a fitting nut 47a.

The first oil chamber 67 is formed between the piston 62 and the free piston 69 fit for free motion within the cylinder tube 61. The free piston 69 defines the first oil chamber 67 and a high pressure gas chamber 70 in one end part of the cylinder tube 61. The high pressure gas chamber 70 is filled with N₂ gas of high pressure. A screw 71 with a seal rubber for filling the high pressure gas chamber 70 with high pressure N₂ gas is screwed in the welding-use conical part 56 of one attachment member 43 constituting the wall of the high pressure gas chamber 70.

The piston 62 is urged in the compressing direction of the hydraulic cylinder 45 with a compression coil spring 72 installed elastically between itself and the rod guide 64. The compression coil spring 72 is to offset the gas reaction force applied from the working oil in the cylinder tube 61 to the piston 62. The gas reaction force results from the fact that the pressure receiving area on the side of the second oil chamber 68 of the piston 62 is smaller than the pressure receiving area on the side of the first oil chamber 67.

In other words, as the working oil in the first and second oil chambers 67, 68 is pressed with the high pressure N₂ gas, the piston 62 receives gas reaction force from the working oil corresponding to the difference in the pressure receiving area. The piston 62 is urged with the gas reaction force in the extending direction of the hydraulic cylinder 45. The hydraulic damper 46 of this embodiment comes to its free length as the gas reaction force offsets or balances with the resilient force of the compression coil spring 72. The N₂ gas pressure of the hydraulic damper 46 is adjusted so that the free length becomes equal to the length for attachment to the vehicle body.
Making the free length equal to the length for attachment to the vehicle body in this way makes the initial load zero when attached to the vehicle body, the reinforcement devices 41, 42 contract with good response even when very small forces are applied, and produce damping force.

The throttle 63 provided in the piston 62 is the same in constitution as the ones used in suspension system-use shock absorbers, etc. The throttle 63 is constituted with first and second check valves 77, 78 having plate springs 75, 76 for opening and closing the opening on one end of the communication holes 73, 74 bored in the piston 62. The plate springs 75, 76 are formed in annular shape, stacked in a plural number, with their inside circumferences held with the piston 62.

The first check valve 77 produces damping force when working oil flows against resilient force of the plate spring 75 in one direction from the first oil chamber 67 to the second oil chamber 68. The second check valve 78 produces damping force when working oil flows against resilient force of the plate spring 76 in one direction from the second oil chamber 68 to the first oil chamber 67.

The extension rod 48 interconnecting the fore-end of the piston rod 47 and the other attachment member 44 is made of pipe, with its one end screwed to the fore-end of the piston rod 47, and the other end welded to the other attachment member 44. The connecting part of the extension rod 48 and the piston rod 47 employs a constitution in which a male thread 47a formed on the piston rod 47 is screwed into a female thread 48a of the extension rod 48, and tightened with a locking nut 79. Employing this attachment constitution of the extension rod 48 using the thread makes it possible to fine-adjust the free lengths of the reinforcement devices 41, 42 varying due to variation in the N₂ gas pressure.

The threaded part as shown in FIG. 3 is covered with a rubber sheath 81 provided for connecting the extension rod 48 and the cylinder tube 61. The rubber sheath 81 prevents mud water and dust from adhering to the piston rod 47. The rubber sheath 81 is formed in a conical cylinder shape with its one end secured to the outside round surface of the cylinder tube 61 and with the other end secured to the outside round surface of the extension rod 48.

Welding the extension rod 48 to the other attachment member 44 is made by projection welding in the same way as the welding one attachment member 43 to the cylinder tube 61. In other words, in order to make this welding, first the fore-end of the welding-use conical part 56 of the other attachment member 44 is brought inside the fore-end part of the extension rod 48 to bring them into line contact with each other. The welding is made in this state by pressing together both components and applying electric current through them. The welding like this makes it possible to position the extension rod 48 and the welding-use conical part 56 easily on the same axial line.

Attachment of the reinforcement devices 41, 42 constituted as described above to the front stability brace 22 and the rear stability brace 39 is made for example as shown in FIG. 4 with the attachment plates 51 of the attachment member 43, 44 in upper position. In other words, to make this attachment, first in this state the attachment plate 51 is placed from under on the underside of the attachment brackets 22b, 39a of the front stability brace 22 or the rear stability brace 39. This attachment is made by tightening a fitting bolt 54 into the brackets 22b, 39a. The reinforcement devices 41, 42 may be easily removed from the vehicle body by loosening the fitting bolt 54 followed by removing the attachment members 43, 44 from the attachment brackets 22b, 39a.

A shown with this embodiment, providing the vehicle body reinforcement device 41 between the front stability brace 22 and the rear stability brace 39 makes it possible to improve rigidity in the longitudinal direction of the monocoque body 1. Therefore, ride comfort is different between a vehicle with the vehicle body reinforcement device 41 extending in the longitudinal direction attached and a vehicle with the vehicle body reinforcement device 41 removed.
Further, providing the vehicle body reinforcement device 42 between the lateral ends of the front stability brace 22 makes it possible to improve lateral rigidity in the front part of the monocoque body 1 with the vehicle body reinforcement device 41.

The above-described vehicle body reinforcement device 41 may be easily attached from under to or removed from the vehicle body in completed state with the front and rear suspension systems 12, 14 and other components mounted on the monocoque body 1 while lifting the vehicle body for example with a jack. Incidentally, vehicles may be occasionally provided with an undercover (not shown) for covering from under the underbody 3. In such a case, the attachment and removal work is made with the undercover removed and the vehicle body reinforcement devices 41, 42 exposed.

The detachable attachment of the vehicle body reinforcement device 41 to the front stability brace 22 and to the rear stability brace 39 as described above may be realized by simply attaching the attachment brackets 22b, 39a to the front stability braces 22 and the rear stability braces 39 using the fitting bolts 22c, 39b.

Therefore, the vehicle body reinforcement devices 41, 42 of this embodiment make it possible to appropriately increase the rigidity of the monocoque body 1 in lateral and longitudinal directions and improve ride comfort without largely changing the vehicle body constitution of existing vehicles while restricting vibration from being generated.

Because the vehicle body reinforcement devices 41, 42 according to this embodiment utilize the space exposed below the vehicle body and outside the passenger compartment, ease of service and comfort in the passenger compartment are not impaired. Moreover, the vehicle body reinforcement devices 41, 42 may be formed long in the longitudinal direction of the vehicle body utilizing a wide space below the floor panel 4.

Because the vehicle body reinforcement device 41 according to this embodiment is formed longer than half of the wheelbase, it is possible to interconnect front and rear parts of the vehicle body that are widely apart from each other and to efficiently make reinforcement against longitudinal deformation while restricting vibration from being generated.
Because the vehicle body reinforcement device 41 according to this embodiment is provided along the raised ridge 2a of the side frame 2, it does not largely project down from the monocoque body 1. Therefore, employing this embodiment makes it possible to make a vehicle compact in spite of being provided with the vehicle body reinforcement device 41.

The vehicle body reinforcement device 41 according to this embodiment is attached to the monocoque body 1 having the front stability braces 22 and the rear stability braces 39. Therefore, according to this embodiment, it is possible to further improve the rigidity of the monocoque body 1, already improved with the front stability braces 22 and the rear stability braces 39, while restricting vibration from being generated.

While this embodiment is shown as an example in which the vehicle body reinforcement devices 41 extending in the longitudinal direction of the vehicle body and the vehicle body reinforcement devices 42 extending in the lateral direction are provided, it is possible to change sufficiently ride comfort of the vehicle by providing only the pair of the vehicle body reinforcement devices 41 extending in the longitudinal direction. As shown with this embodiment, providing the vehicle body reinforcement devices 42, extending in the lateral direction, makes it possible to appropriately improve the lateral rigidity with this vehicle body reinforcement devices 42 while restricting vibration from being generated.

### (Second Embodiment)

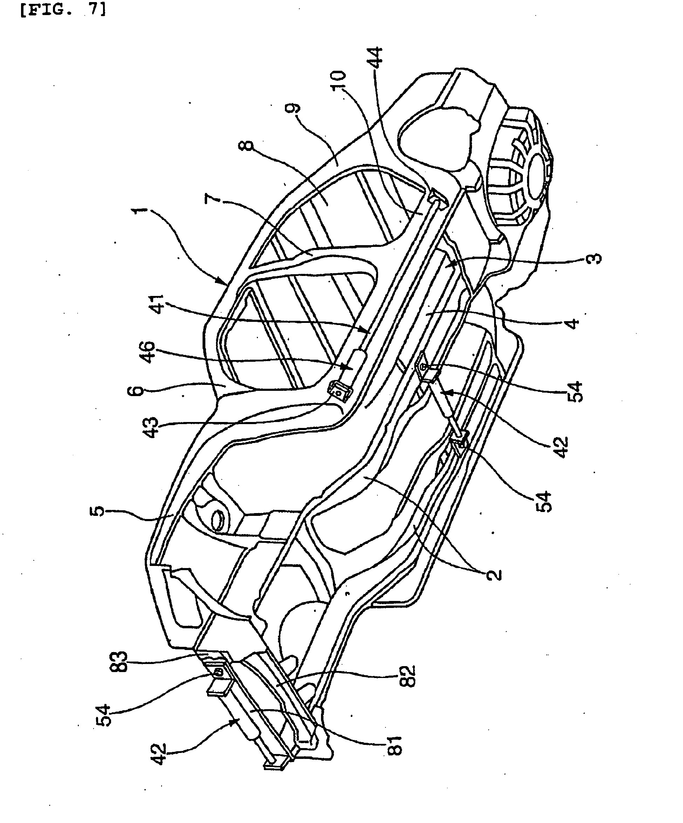

The vehicle body reinforcement device 41 may be provided as shown in FIG. 7 along the side sill 10 of the monocoque body 1.
FIG. 7 is a perspective view of the monocoque body with the vehicle body reinforcement device attached to the outer side of the side sill. In the figure, components the same as or similar to those described in reference to FIGs. 1 through 6 are provided with the same reference numerals and symbols, and their detailed descriptions will not be repeated.

The vehicle body reinforcement device 41 is the same in constitution as the one used when the first embodiment is employed and is detachably attached along a pair of right and left side sills 10 of the monocoque body 1. While only the vehicle body reinforcement device 41 located on the left side of the vehicle body is depicted in FIG. 7, the vehicle body reinforcement device 41 is also attached detachably to the side sill 10 on the right side of the vehicle body.

Motor vehicles may be occasionally provided with an external cover (not shown) covering the side sill 10 from outside. In such a case, it is preferable to place the vehicle body reinforcement device 41 behind the external cover so that appearance of the vehicle is not adversely affected. To employ this constitution, the external cover is detachably attached to the monocoque body 1 so that the vehicle body reinforcement device 41 may be attached to and removed from the side sill 10.

The monocoque body 1 is provided with a bumper reinforcement 81 and a front cross member 82 laterally placed at the front end parts of a pair of right and left side frames 2, 2. The bumper reinforcement 81 is attached to attachment seats 83 attached to the front end parts of the side frames 2, 2 together with the vehicle body reinforcement devices 42 with its length directed in the lateral direction of the vehicle. In other words, the vehicle body reinforcement device 42 is attached, with its length directed in the vehicle width direction, to two positions on this monocoque body 1, one on the bumper reinforcement 81 and the other between the pair of right and left raised ridges 2a of the side frames 2, 2.

A shown with this embodiment, employing a constitution in which the vehicle body reinforcement device 41 is placed outside the side sill 10 makes it possible to form the vehicle body reinforcement device 41 long in the longitudinal direction of the vehicle body utilizing a large space outside the side sill 10. Therefore, this embodiment makes it possible to efficiently make reinforcement against longitudinal deformation while restricting vibration from being generated.

Further, the vehicle body reinforcement device 41 according to this embodiment does not project largely outside from the side sill 10 because it is provided along the side sill 10. Therefore, employing this embodiment makes it possible to constitute a vehicle compactly in spite of being provided with the vehicle body reinforcement device 41.

With this embodiment, the vehicle body reinforcement device 42, extending laterally, is attached to two positions, one on the bumper reinforcement 81 and the other between a pair of right and left raised ridges 2a of the side frames 2, 2. Therefore, this embodiment makes it possible to appropriately improve the rigidity in the lateral direction of the vehicle while restricting vibration from being generated.

### (Third Embodiment)

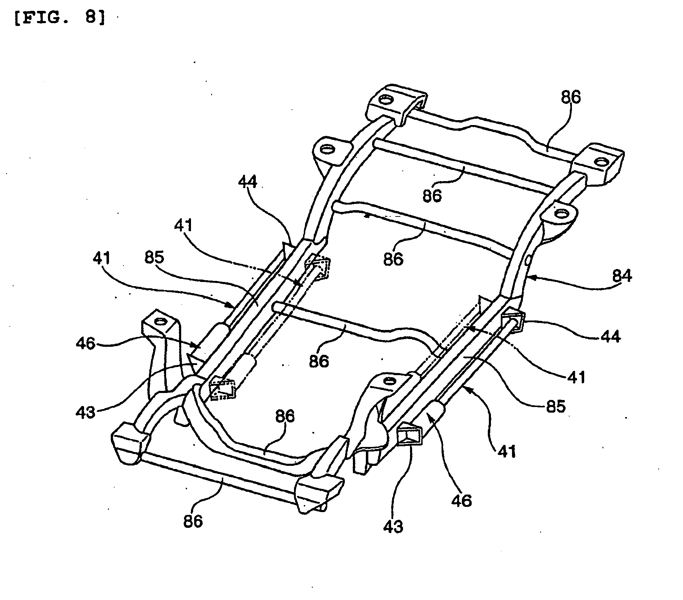

The vehicle body reinforcement device according to this embodiment may be attached as shown in FIG. 8 to a ladder-shaped vehicle body frame.
FIG. 8 is a perspective view of the ladder-shaped vehicle body frame provided with the vehicle body reinforcement device according to the invention. In the figure, components the same as or similar to those described in reference to FIGs. 1 through 6 are provided with the same reference numerals and symbols, and their detailed descriptions will not be repeated.

The vehicle body frame 84 shown in FIG. 8 is of a ladder shape conventionally well-known, made up of: a pair of side frames 85, 85 extending in the longitudinal direction on both lateral end parts of the vehicle body, and a plural number of cross members 86 laterally spanned between both the side frames 85, 85.

The vehicle body reinforcement device 41 is the same in constitution as the one used when the first embodiment is employed and is detachably attached, in the state of extending in the longitudinal direction, to the outside faces of the side frames 85, 85. When attaching the vehicle body reinforcement device 41, the vehicle body reinforcement device 41 may be detachably attached, as shown in chain double-dashed lines in FIG. 8, to the inside face of the side frame 85. Further, although not shown, the vehicle body reinforcement device 41 may also be attached to the underside of the side frames 85, 85.

As already mentioned, the motor vehicles are occasionally provided with an external cover (not shown) covering the side frames 85, 85 from outside. In such a case, it is preferable to place the vehicle body reinforcement device 41 inside the external cover so that appearance of the vehicle is not adversely affected. To employ this constitution, the external cover is detachably attached to the ladder-shaped vehicle body frame 84 so that the vehicle body reinforcement device 41 may be attached to and removed from the side frames 85, 85.

In this way, employing a constitution in which the vehicle body reinforcement device 41 is placed outside the side frames 85,85 makes it possible to form the vehicle body reinforcement device 41 long in the longitudinal direction of the vehicle body utilizing a large space outside the side frames 85,85. Therefore, this embodiment makes it possible to efficiently make reinforcement against longitudinal deformation while restricting vibration from being generated.

Further, the vehicle body reinforcement device 41 according to this embodiment does not project largely outside from the side frames 85, 85 because it is provided along the side frames 85, 85. Therefore, employing this embodiment makes it possible to constitute a vehicle compactly in spite of being provided with the vehicle body reinforcement device 41.

Although not shown, the vehicle body reinforcement device 42, with its length directed in the vehicle width direction, may be attached between a pair of side frames 85, 85 to the ladder-shaped vehicle body frame 84 shown here as an embodiment. Providing the laterally extending vehicle body reinforcement device 42 in this way makes it possible to improve the lateral rigidity of the vehicle body while restricting vibration from being generated.

### (Fourth Embodiment)

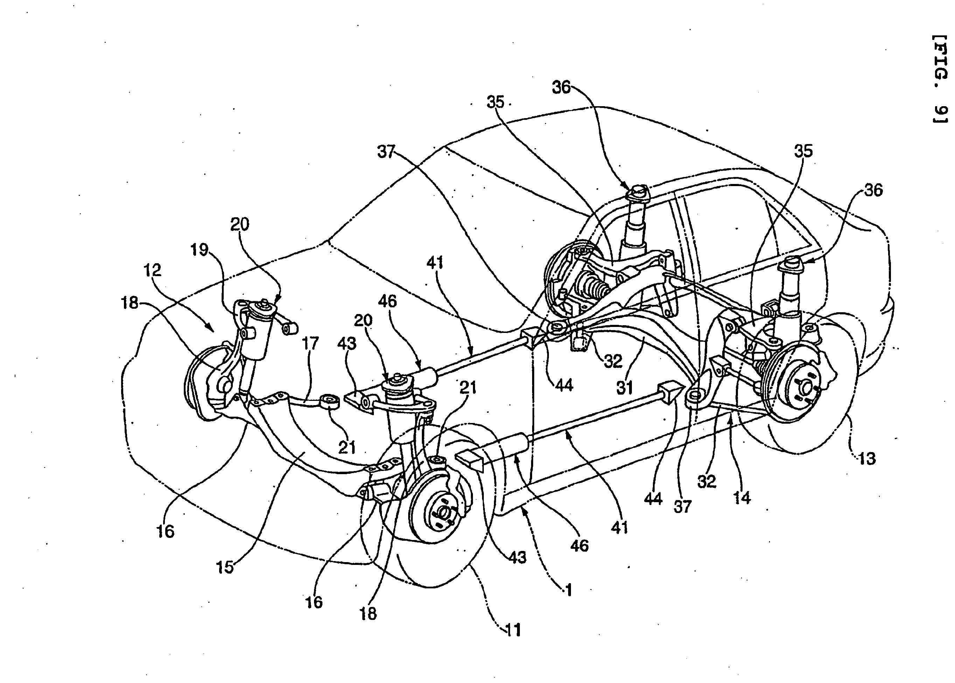

The vehicle body reinforcement device according to this invention as shown in FIG. 9 may be provided between the front wheel suspension system and the rear wheel suspension system.
FIG. 9 is a perspective view of another attachment example of the vehicle body reinforcement device. In the figure, components the same as or similar to those described in reference to FIGs. 1 through 6 are provided with the same reference numerals and symbols, and their detailed descriptions will not be repeated.

The end part (connecting member 21) on the vehicle body side of the rear lower arm of the front wheel suspension system 12 shown in FIG. 9 is directly supported with the underside of the floor panel 4 (not shown) of the monocoque body 1. The front attachment part 37 of the rear wheel suspension system 14 according to this embodiment is attached in one position to the underside of the floor panel 4. That is, unlike the first embodiment, the front and rear wheel suspension systems 12, 14 according to this embodiment are not provided with the front stability brace 22 and the rear stability braces 39.

The vehicle body reinforcement device 41 according to this embodiment is of the same constitution as that used when employing the first embodiment, and is detachably attached, with its length put in the front-rear direction, to the underside of the floor panel 4 between the front wheel suspension system 12 and the rear wheel suspension system 14. To put it in detail, the front end part (attachment member 43) of the body-use reinforcement device 41 according to this embodiment is detachably attached to part of the floor panel 4 in the vicinity of the part (the connecting member 21 of the rear lower arm 17) for attaching the front wheel suspension system 12 to the vehicle body frame (monocoque body 1).

The rear end part (the attachment member 44) of the body-use reinforcement device 41 is detachably attached to part of the floor panel 4 in the vicinity of the part (the front attachment part 37 of the rear suspension member 31) for attaching the rear wheel suspension system 14 to the vehicle body frame (monocoque body 1). The body-use reinforcement devices 41 are provided, like when employing the first embodiment, to form a pair in both lateral directions, parallel to each other, along the floor panel 4.

According to this embodiment, rigidity is appropriately improved with the vehicle body reinforcement device 41, while restricting vibration from being generated, between part of the floor panel 4 around the area to which longitudinal pressing force is applied from the rear lower arm 17 of the front wheel suspension system 12 and part of the floor panel 4 around the area to which longitudinal pressing force is applied from the front attachment part 37 of the rear wheel suspension system 14.

In case that the vehicle body reinforcement device 41 is spanned between part of the vehicle body frame where the front wheel suspension system 12 is attached to and part of the vehicle body frame where the rear wheel suspension system 14 is attached to, as shown with this embodiment, the constitution of attaching the vehicle body reinforcement device 41 to the vehicle body frame is not limited to the attachment constitution shown in FIG. 9. For example, the front end part (attachment part 43) of the vehicle body reinforcement device 41 may be formed integrally with the inner cylinder of the connecting member 21 of the rear lower arm 17 of the front wheel suspension system 12 and attached together with it to the floor panel 4. Likewise, the rear end part of the vehicle body reinforcement device 41 may be formed integrally with the front attachment part 37 of the rear wheel suspension system 14 or with the front end part, adjacent to the front attachment part 37, of the rear suspension member 31 and attached together with it to the floor panel 4.

The front end part (attachment member 43) of the vehicle body reinforcement device 41 may be attached together with the inner cylinder of the connecting member 21 to the attachment seat (not shown) of the floor panel 4 to which the connecting member 21 is attached. The rear end part (attachment member 44) of the vehicle body reinforcement device 41 may be attached together with the front attachment part 37 to the attachment seat (not shown) of the floor panel 4 to which the front attachment part 37 is attached. In this case, the front end part of the vehicle body reinforcement device 41 may be attached by tightening together with the inner cylinder of the connecting member 21 to the floor panel 4, and the rear end part of the vehicle body reinforcement device 41 may be attached by tightening together with the front attachment part 37 to the floor panel 4. When attaching the vehicle body reinforcement device 41 to the vehicle body frame, utilizing in this way the attachment seat for the front wheel suspension system and the attachment seat for the rear wheel suspension system makes the attachment easier and more economical in comparison with providing dedicated attachment seats on the vehicle body frame.

### (Fifth Embodiment)

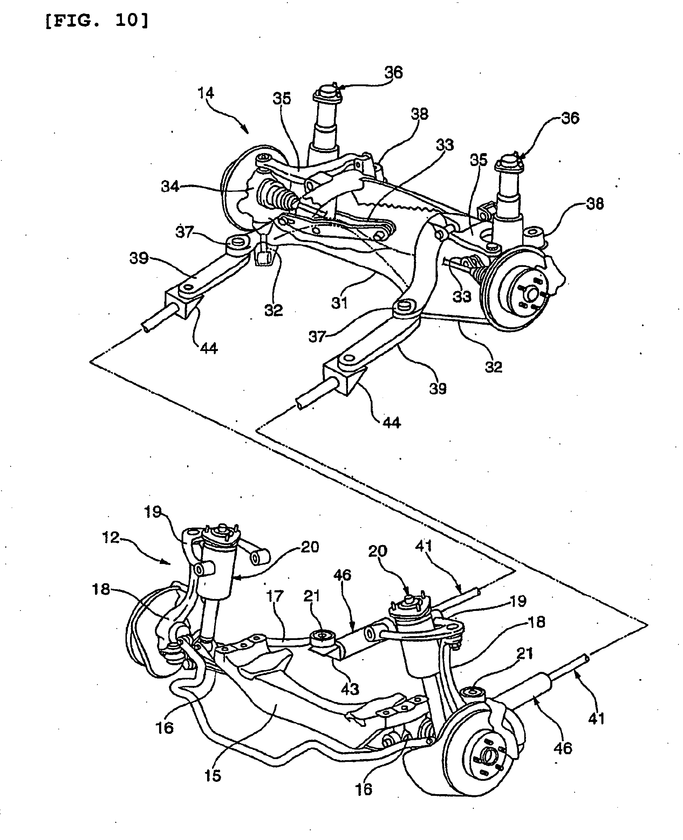

When only the rear stability brace is provided on the vehicle body frame, the vehicle body reinforcement device 41 according to the invention may be attached to the vehicle body frame as shown in FIG. 10. FIG. 10 is a perspective view of another attachment example of the vehicle body reinforcement device. In the figure, components the same as or similar to those described in reference to FIGs. 1 through 6 are provided with the same reference numerals and symbols, and their detailed descriptions will not be repeated.

The vehicle body side end (connecting member 21) of the rear lower arm 17 of the front wheel suspension system 12 shown in FIG. 10 is directly supported with the floor panel 4 (not shown) of the monocoque body 1. The front attachment part 37 of the rear cushion member 31 of the rear wheel suspension system 14 is directly attached to the attachment seat (not shown) for the rear wheel suspension system of the floor panel 4 and is also connected to part of the floor panel 4 in front of the attachment seat by means of the rear stability braces 39.

The vehicle body reinforcement device 41 according to this embodiment is of the same constitution as that used when employing the first embodiment and is spanned between the connecting member 21 and the front end part of the rear stability braces 39.
The front end part (attachment member 43) of the vehicle body reinforcement device 41 is attached by tightening together with the connecting member 21 to the floor panel 4. The rear end part (attachment member 44) of the vehicle body reinforcement device 41 is attached by tightening together with the front end part of the rear stability braces 39 to the floor panel 4.

According to this embodiment, longitudinal rigidity is appropriately improved with the vehicle body reinforcement device 41, while restricting vibration from being generated, between part of the floor panel 4 around the area to which longitudinal pressing force is applied from the rear lower arm 17 of the front wheel suspension system 12 and part of the floor panel 4 around the area to which longitudinal pressing force is applied from the front end part of the rear stability brace 39.

As shown with this embodiment, when attaching the vehicle body reinforcement device 41 to the vehicle body frame, utilizing the rear lower arm 17 of the front wheel suspension unit 12 and the rear stability brace 39 makes the attachment easier and more economical in comparison with providing dedicated attachment seats on the vehicle body frame.

### [Industrial Applicability]

The vehicle body reinforcement device according to this invention may be used to reinforce the vehicle body of motor vehicles such as passenger cars, trucks, and busses.

## Claims

1. Vehicle body frame with a vehicle body reinforcement device having vehicle body reinforcement members (41) formed in an elongated shape and each comprising a hydraulic damping force generating means (46) for generating damping force against its longitudinal deformation, wherein the vehicle body reinforcement members (41) are disposed in laterally paired positions on a vehicle body frame as a right and left pair of vehicle body reinforcement members (41) with their length put in a longitudinal direction of the vehicle body (1), **characterized in that** both end parts of the vehicle body reinforcement members are detachably attached from the outside to parts (3) of the vehicle body frame exposed outside a passenger compartment in a lower part of the vehicle body (1), wherein at least part of the overall length of the vehicle body reinforcement members (41) is disposed within a wheelbase of the vehicle body and extends along half or more of the wheelbase.

2. Vehicle body frame according to claim 1, wherein the vehicle body reinforcement members (41) are provided as a pair of parallel components, which are arranged parallel in the lateral directions of the vehicle.

3. Vehicle body frame according to claim 2, wherein the vehicle body reinforcement members (41) are provided on a vehicle body frame as a monocoque body (1).

4. Vehicle body frame according to claim 3, wherein the both ends of the vehicle body reinforcement members (41) are detachably attached from outside to positions, which are exposed outside the passenger compartment, below the vehicle body of the monocoque body (1).

5. Vehicle body frame according to one of the claims 1 to 4, wherein positions on the vehicle body frame to which the both ends of the vehicle body reinforcement members (41) are attached are below a floor panel (3).

6. Vehicle body frame according to one of the claims 1 to 5, wherein positions on the vehicle body frame to which both ends of the vehicle body reinforcement members (41) are attached are outside of side sills of the vehicle body frame.

7. Vehicle body frame according to one of the claim 1 to 6, wherein the vehicle body reinforcement members (41) are disposed along longitudinal extension parts formed at both lateral end parts of the vehicle body frame.

8. Vehicle body frame according to one of the claims 1 to 7, wherein the vehicle body reinforcement members (41) are spanned between a proximity of part of the vehicle body frame to which a front wheel suspension system (20) is attached and a proximity of part of the vehicle body frame to which a rear wheel suspension system (39) is attached.

9. Vehicle body frame according to one of the claims 1 to 8, wherein the vehicle body reinforcement members (41) are spanned between a proximity of part of the vehicle body frame to which a lower arm of a front wheel suspension system is attached and a proximity of part of the vehicle body frame to which a lower arm of a rear wheel suspension system is attached.

10. Vehicle body frame according to one of the claims 1 to 9, wherein the vehicle body reinforcement members (41) are spanned between part of the vehicle body frame to which a lower arm of the front wheel suspension system is attached and a front end part of a rear stability brace, and the rear stability brace is a member, extending forward from part of the vehicle body frame to which the rear wheel suspension system is attached, and attached to the vehicle body frame.

11. Vehicle body frame according to one of the claims 1 to 10, wherein the vehicle body reinforcement members (41) are spanned between a rear end part of a front stability brace and a front end part of a rear stability brace, the front stability brace is a member, with its front part secured to a central underside of a suspension member of a front wheel suspension system, with its rear part supporting a lower arm of the front wheel suspension system, secured to the vehicle body frame, and the rear stability brace is a member, extending forward from part of the vehicle body frame to which a rear wheel suspension system is attached, and attached to the vehicle body frame.

12. Vehicle body frame according to one of the claims 1 to 11, wherein the vehicle body reinforcement members (41) are provided with at least another vehicle body reinforcement member (42), wherein this another vehicle body reinforcement member (42) is arranged with its length put in a lateral direction of the vehicle, and with its both ends attached to the vehicle body frame.

## Patentansprüche

1. Fahrzeugrahmen mit einer Fahrzeugrahmenverstärkungsvorrichtung, die Fahrzeugrahmenverstärkungselemente (41) aufweist, welche eine langgestreckte Form haben und jeweils hydraulische Dämpfungskrafterzeugungselemente (46) aufweisen, die Dämpfungskraft gegen Verformung in Längsrichtung erzeugen,
wobei die Fahrzeugrahmenverstärkungselemente (41) paarweise seitlich am Fahrzeugrahmen als ein rechtes und linkes Paar von Fahrzeugrahmenverstärkungselementen (41) angebracht sind, und, die mit ihrer Längserstreckung in Längsrichtung des Fahrzeugrahmens angeordnet sind,
**dadurch gekennzeichnet, dass** beide Endstücke der Fahrzeugrahmenverstärkungselemente (41) lösbar von außen an Teilen (3) des Fahrzeugsrahmens angebracht sind, welche außerhalb des Fahrgastraums in einem unteren Bereich des Fahrzeugrahmens (1) freiliegen,
wobei wenigstens ein Teil der Gesamtlänge der Fahrzeugrahmenverstärkungselemente (41) innerhalb des Achsabstandes des Fahrzeugrahmens angeordnet ist, und sich wenigstens über die Hälfte des Achsabstandes entlang erstreckt.

2. Fahrzeugrahmen nach Anspruch 1, wobei die Fahrzeugrahmenverstärkungselemente (41) als Paar von parallelen Teilen angeordnet sind, die parallel zu der Querrichtung des Fahrzeuges angebracht sind.

3. Fahrzeugrahmen nach Anspruch 2, wobei die Fahrzeugrahmenverstärkungselemente (41) an einem Fahrzeugrahmen angeordnet sind, der ein Monocoque-Rahmen (1) ist.

4. Fahrzeugrahmen nach Anspruch 3, wobei beide Enden der Fahrzeugrahmenverstärkungselemente (41) lösbar von außen an solchen Stellen angebracht sind, die außerhalb des Fahrgastraumes und unterhalb des Monocoque-Fahrzeugrahmens freiliegen.

5. Fahrzeugrahmen nach einem der Ansprüche 1 bis 4, wobei die Stellen an dem Fahrzeugrahmen, an welchen die beiden Enden der Fahrzeugrahmenverstärkungselemente (41) angebracht sind, unter dem Fahrzeugboden (3) liegen.

6. Fahrzeugrahmen nach einem der Ansprüche 1 bis 5, wobei die Stellen an dem Fahrzeugrahmen, an welchen die beiden Enden der Fahrzeugrahmenverstärkungselemente (41) angebracht sind, außerhalb der Seitenschweller des Fahrzeugrahmens liegen.

7. Fahrzeugrahmen nach einem der Ansprüche 1 bis 6, wobei die Fahrzeugrahmenverstärkungselemente (41) entlang sich in Längsrichtung ersteckenden Teilen angeordnet sind, die an beiden seitlichen Endabschnitten des Fahrzeugrahmens ausgebildet sind.

8. Fahrzeugrahmen nach einem der Ansprüche 1 bis 7, wobei sich die Fahrzeugrahmenverstärkungselemente (41) zwischen der Umgebung eines Teils des Fahrzeugrahmens, an welchem eine Vorderachsenaufhängung (20) befestigt ist, und der Umgebung eines Teils des Fahrzeugrahmens, an welchem die Hinterachsenaufhängung (39) befestigt ist, erstrecken.

9. Fahrzeugrahmen nach einem der Ansprüche 1 bis 8, wobei sich die Fahrzeugrahmenver-stärkungselemente (41) zwischen der Umgebung eines Teils des Fahrzeugrahmens, an welchem ein unterer Träger der Vorderachsenaufhängung befestigt ist, und der Umgebung eines Teils des Fahrzeugrahmens, an welchem ein unterer Träger der Hinterachsenaufhängung befestigt ist, erstrecken.

10. Fahrzeugrahmen nach einem der Ansprüche 1 bis 9, wobei sich die Fahrzeugrahmenverstärkungselemente (41) zwischen einem Teil des Fahrzeugrahmens, an dem ein unterer
Träger der Vorderachsenaufhängung befestigt ist, und einem vorderen Endabschnitt einer Heckstabilisierungsstrebe erstrecken, wobei die Heckstabilisierungsstrebe ein Element ist, das sich von einem Teil des Fahrzeugrahmens, an dem die Hinterachsenaufhängung befestigt ist, nach vorne erstreckt und am Fahrzeugrahmen befestigt ist.

11. Fahrzeugrahmen nach einem der Ansprüche 1 bis 10, wobei sich die Fahrzeugrahmenverstärkungselemente (41) zwischen einem hinteren Endabschnitt einer vorderen Stabilisierungsstrebe und einem vorderen Endabschnitt einer hinteren Stabilisierungsstrebe erstrecken, wobei die vordere Stabilisierungsstrebe ein Element ist, das mit dem vorderen Abschnitt zentral an der Unterseite eines Aufhängungselementes der Vorderachsenaufhängung befestigt ist, und das mit dem hinteren Abschnitt einen unteren Träger der Vorderachsenaufhängung abstützt, und am Fahrzeugrahmen befestigt ist, wobei die hintere Stabilisierungsstrebe ein Element ist, das sich von einem Teil des Fahrzeugrahmens, an welchem die Hinterachsenaufhängung angebracht ist, nach vorne erstreckt und am Fahrzeugrahmen angebracht ist.

12. Fahrzeugrahmen nach einem der Ansprüche 1 bis 11, wobei die Fahrzeugrahmenverstär-kungselemente (41) mit wenigstens einem weiteren Fahrzeugrahmenverstärkungselement (42) versehen sind, wobei dieses weitere Fahrzeugrahmenverstärkungselement (42) mit seiner Längserstreckung einer Querrichtung zum Fahrzeug angebracht ist und mit seinen beiden Endabschnitten am Fahrzeugrahmen befestigt ist.

## Revendications

1. Châssis de carrosserie de véhicule avec un dispositif de renfort de carrosserie de véhicule comportant des éléments de renfort de carrosserie de véhicule (41) conformés en une forme allongée et comprenant chacun des moyens de génération de force d'amortissement hydraulique (46) pour générer une force d'amortissement contre sa déformation longitudinale, dans lequel les éléments de renfort de carrosserie de véhicule (41) sont disposés dans des positions latéralement regroupées en paires sur un châssis de carrosserie de véhicule, comme une paire droite et gauche d'éléments de renfort de carrosserie de véhicule (41) avec leur longueur placée dans une direction longitudinale de la carrosserie de véhicule (1), **caractérisé en ce que** les deux parties d'extrémités des éléments de renfort de carrosserie de véhicule sont fixées de façon amovible depuis l'extérieur aux parties (3) du châssis de carrosserie de véhicule exposées à l'extérieur d'un habitacle passager dans une partie inférieure de la carrosserie de véhicule (1), dans lequel au moins une partie de la longueur totale des éléments de renfort de carrosserie de véhicule (41) est disposée dans un empattement de la carrosserie de véhicule et s'étend suivant la moitié ou davantage de l'empattement.

2. Châssis de carrosserie de véhicule selon la revendication 1, dans lequel les éléments de renfort de carrosserie de véhicule (41) sont prévus comme une paire de composants parallèles, qui sont agencés parallèlement dans les directions latérales du véhicule.

3. Châssis de carrosserie de véhicule selon la revendication 2, dans lequel les éléments de renfort de carrosserie de véhicule (41) sont disposés sur un châssis de carrosserie de véhicule comme une carrosserie monocoque (1).

4. Châssis de carrosserie de véhicule selon la revendication 3, dans lequel les deux extrémités des éléments de renfort de carrosserie de véhicule (41) sont fixées de façon amovible depuis l'extérieur à des parties, qui sont exposées à l'extérieur de l'habitacle passager, au-dessous de la carrosserie de véhicule de la carrosserie monocoque (1).

5. Châssis de carrosserie de véhicule selon l'une des revendications 1 à 4, dans lequel les positions sur le châssis de carrosserie de véhicule, auxquelles les deux extrémités des éléments de renfort de carrosserie de véhicule (41) sont fixées, sont au-dessous d'un panneau de plancher (3).

6. Châssis de carrosserie de véhicule selon l'une des revendications 1 à 5, dans lequel les positions sur le châssis de carrosserie de véhicule, auxquelles les deux extrémités des éléments de renfort de carrosserie de véhicule (41) sont fixées, sont à l'extérieur de longerons latéraux du châssis de carrosserie de véhicule.

7. Châssis de carrosserie de véhicule selon l'une des revendications 1 à 6, dans lequel les éléments de renfort de carrosserie de véhicule (41) sont disposés suivant des parties d'extension longitudinales formées aux deux parties d'extrémités latérales du châssis de carrosserie de véhicule.

8. Châssis de carrosserie de véhicule selon l'une des revendications 1 à 7, dans lequel les éléments de renfort de carrosserie de véhicule (41) s'étendent entre une proximité d'une partie du châssis de carrosserie de véhicule, à laquelle un système de suspension de roue avant (20) est fixé, et une proximité d'une partie du châssis de carrosserie de véhicule, à laquelle un système de suspension de roue arrière (39) est fixé.

9. Châssis de carrosserie de véhicule selon l'une des revendications 1 à 8, dans lequel les éléments de renfort de carrosserie de véhicule (41) s'étendent entre une proximité d'une partie du châssis de carrosserie de véhicule, à laquelle un bras inférieur d'un système de suspension de roue avant est fixé, et une proximité d'une partie du châssis de carrosserie de véhicule, à laquelle un bras inférieur d'un système de suspension de roue arrière est fixé.

10. Châssis de carrosserie de véhicule selon l'une des revendications 1 à 9, dans lequel les éléments de renfort de carrosserie de véhicule (41) s'étendent entre une partie du châssis de carrosserie de véhicule, à laquelle un bras inférieur du système de suspension de roue avant est fixé, et une partie d'extrémité avant d'un étrier de stabilité arrière et l'étrier de stabilité arrière est un élément s'étendant vers l'avant à partir d'une partie du châssis de carrosserie de véhicule, à laquelle le système de suspension de roue arrière est fixé, et fixé au châssis de carrosserie de véhicule.

11. Châssis de carrosserie de véhicule selon l'une des revendications 1 à 10, dans lequel les éléments de renfort de carrosserie de véhicule (41) s'étendent entre une partie d'extrémité arrière d'un étrier de stabilité avant et une partie d'extrémité avant d'un étrier de stabilité arrière, l'étrier de stabilité avant est un élément, avec sa partie avant fixée au dessous au centre d'un élément de suspension d'un système de suspension de roue avant, avec sa partie arrière supportant un bras inférieur du système de suspension de roue avant, fixé au châssis de carrosserie de véhicule, et l'étrier de stabilité arrière est un élément s'étendant vers l'avant à partir d'une partie du châssis de carrosserie de véhicule, à laquelle un système de suspension de roue arrière est fixé, et fixé au châssis de carrosserie de véhicule.

12. Châssis de carrosserie de véhicule selon l'une des revendications 1 à 11, dans lequel les éléments de renfort de carrosserie de véhicule (41) sont pourvus d'au moins un autre élément de renfort de carrosserie de véhicule (42), dans lequel cet autre élément de renfort de carrosserie de véhicule (42) est agencé avec sa longueur placée dans une direction latérale du véhicule et avec ses deux extrémités fixées au châssis de carrosserie de véhicule.
